# EUROPÄISCHE PATENTSCHRIFT

(11) **EP 3 594 505 B1**
(45) Veröffentlichungstag und Bekanntmachung des Hinweises auf die Patenterteilung: **13.12.2023**
(21) Anmeldenummer: 18465547.0
(22) Anmeldetag: 11.07.2018
(51) Int. Cl.: F04D 25/02, F16H 57/04

(54) **PUMPENVORRICHTUNG**
PUMP DEVICE
DISPOSITIF DE POMPAGE

(43) Veröffentlichungstag der Anmeldung: 15.01.2020
(73) Patentinhaber: Vitesco Technologies GmbH, 93055 Regensburg (DE)
(72) Erfinder: Böhm, Christian, 60316 Frankfurt am Main (DE); Soptica, Silviu, 307220 Giroc (RO)
(74) Vertreter: Vitesco Technologies

(56) Entgegenhaltungen:
- WO-A1-2013/007247
- WO-A1-2015/065279
- DE-A1-102015 212 537
- DE-A1-102015 218 550
- DE-A1-102017 117 600
- DE-B3-102014 200 723

## Beschreibung

Die vorliegende Erfindung betrifft eine Pumpenvorrichtung, insbesondere für ein Kraftfahrzeug, ein Kraftfahrzeug mit der Pumpenvorrichtung sowie ein Verfahren zum Betreiben der Pumpenvorrichtung.

Aus der DE 10 2017 117 600 A1 ist eine Pumpenvorrichtung zur Anordnung in einem Kraftfahrzeuggetriebe mit einem Elektromotor und einem Planetengetriebe bekannt, das einen Planetenträger und zwei radial übereinander angeordnete Freiläufe aufweist und durch Drehrichtungsumkehr des Elektromotors zwischen einem ersten und gegensinnigen zweiten Übersetzungsverhältnis umschaltbar ist.

Aus der WO 2015/065279 A1 ist ein Getriebe mit einem Planetengetriebe mit einer Anzahl von Komponenten, bestehend aus einem Hohlrad, einem Sonnenrad, mindestens einem Planetenrad und einem Planetenradträger bekannt, wobei eine Antriebseinrichtung mit einer Eingangswelle des Getriebes verbunden ist und wobei eine Abtriebseinrichtung mit einer Ausgangswelle des Getriebes verbunden ist. Eine erste Kupplungsvorrichtung ist in Verbindung mit zwei Komponenten angeordnet, die in dem Planetengetriebe enthalten sind, um eine Verbindung der beiden Komponenten in einer ersten Drehrichtung der Eingangswelle zu ermöglichen, und eine zweite Kupplungsvorrichtung ist in Verbindung mit dem Planetenradträger und einem statischen Abschnitt in Bezug auf den Planetenradträger angeordnet, um eine Drehung des Planetenradträgers in einer zweiten, der ersten Drehrichtung entgegengesetzten Drehrichtung der Eingangswelle zu verhindern.

Aus der DE 10 2015 212 537 A1 ist eine Antriebsvorrichtung für eine Ölpumpe bekannt, welche ein Planetengetriebe, das ein erstes, ein zweites und ein drittes Element sowie einen ersten und einen zweiten Freilauf aufweist, wobei die Elemente in vorgegebener Weise mit einer Motorwelle eines Antriebsmotors sowie einer Eingangswelle zum Antrieb einer Ölpumpe drehfest verbindbar sind. Die Motorwelle des Antriebsmotors ist über den ersten Freilauf mit dem ersten Element des Planetengetriebes und über den zweiten Freilauf mit dem zweiten Element des Planetengetriebes verbunden, die Eingangswelle ist zum Antrieb der Ölpumpe mit dem zweiten Element des Planetengetriebes drehfest verbunden, und das dritte Element ist drehfest festgelegt, wobei die Freiläufe so angeordnet sind, dass sie jeweils unterschiedliche Sperrrichtungen aufweisen.

Aus der DE 10 2014 200 723 B3 ist eine Planetengetriebeanordnung mit einem Leistungseingang, der ein zum Umlauf um eine Getriebeachse vorgesehenes erstes Sonnenrad direkt treibt, einem Leistungsausgang, mit einem gleichachsig zur Getriebeachse umlaufenden Abtriebsorgan, einer zur Getriebeachse konzentrischen Hohlradanordnung, einem Planetenträger, einer Planetenanordnung, die auf dem Planetenträger sitzt, einer ersten Freilaufeinrichtung, und einer zweiten Freilaufeinrichtung bekannt, wobei das erste Sonnenrad radial von innen her in wenigstens einen Planeten der Planetenanordnung eingreift, die erste Freilaufeinrichtung derart in die Planentengetriebeanordnung eingebunden ist, dass diese auf das Abtriebsorgan eine Drehbewegung überträgt, wenn das erste Sonnenrad mit einem ersten Drehsinn rotiert, und die zweite Freilaufeinrichtung derart in die Planentengetriebeanordnung eingebunden ist, dass diese auf das Abtriebsorgan eine Drehbewegung überträgt, wenn das erste Sonnenrad mit einem dem ersten Drehsinn entgegen gesetzten zweiten Drehsinn rotiert, und das Abtriebsorgan unabhängig vom Drehsinn des ersten Sonnenrades mit einem durch die Kopplungswirkungen der ersten und der zweiten Freilaufeinrichtung festgelegten Drehsinn rotiert, wobei sich bei Übertragung eines Drehmomentes über die erste Freilaufeinrichtung eine Übersetzungswirkung ergibt, die sich von der Übersetzungswirkung bei der Übertragung eines Drehmomentes über die zweite Freilaufeinrichtung unterscheidet.

Eine Aufgabe einer Ausführung der vorliegenden Erfindung ist es, eine Pumpenvorrichtung, insbesondere deren Betrieb, zu verbessern.

Diese Aufgabe wird durch eine Pumpenvorrichtung mit den Merkmalen des Anspruchs 1 gelöst. Ansprüche 8, 9 stellen ein Kraftfahrzeug mit einer hier beschriebenen Pumpenvorrichtung bzw. ein Verfahren zum Betreiben einer hier beschriebenen Pumpenvorrichtung unter Schutz. Vorteilhafte Ausführungsformen der Erfindung sind Gegenstand der Unteransprüche.

Nach einer Ausführung der vorliegenden Erfindung weist eine Pumpenvorrichtung eine Pumpe mit zwei relativ zueinander beweglichen, insbesondere verdrehbaren, Pumpengliedern, die nachfolgend ohne Beschränkung der Allgemeinheit auch als erstes und zweites Pumpenglied bezeichnet werden, und einen elektrischen Antrieb mit einem Antriebsgehäuse und einer hiergegen (durch den Antrieb bzw. aktiv bzw. elektr (omotor) isch) verdrehbaren Ausgangswelle zum Betreiben der Pumpe auf.

In einer Ausführung kann das eine (erste) Pumpenglied einen Rotor und das andere (zweite) Pumpenglied ein Pumpengehäuse aufweisen, insbesondere sein, in dem der Rotor (drehbar) angeordnet ist, insbesondere um Fluid zu fördern. In einer anderen Ausführung kann umgekehrt das eine (erste) Pumpenglied ein Pumpengehäuse und das andere (zweite) Pumpenglied einen Rotor aufweisen, insbesondere sein, der in dem Pumpengehäuse (drehbar) angeordnet ist, insbesondere um Fluid zu fördern.

In einer Weiterbildung ist das Pumpengehäuse relativ zum Antriebsgehäuse drehfest (angeordnet). Hierdurch kann in einer Ausführung eine kompakte(re) und/oder stabile(re) Pumpenvorrichtung realisiert werden.

In einer anderen Weiterbildung ist das Pumpengehäuse relativ zum Antriebsgehäuse (ver) drehbar (gelagert) . Hierdurch kann in einer Ausführung eine Differentialpumpe realisiert werden, deren Betrieb durch Rotation des Pumpengehäuses relativ zum Antriebsgehäuse und gleich- und/oder gegensinnige Rotation des Rotors in dem Pumpengehäuses durch die Ausgangswelle vorteilhaft variiert werden kann.

Nach einer Ausführung der vorliegenden Erfindung weist die Pumpenvorrichtung ein ein- oder mehrstufiges Getriebe auf, das die Ausgangswelle des elektrischen Antriebs mit dem einen (ersten) Pumpenglied, insbesondere also dem Rotor oder Pumpengehäuse, (dreh)koppelt und, in einer Ausführung alleine, durch Drehrichtungsumkehr des elektrischen Antriebs bzw. des Drehsinns bzw. der Drehrichtung seiner Ausgangswelle zwischen einem ersten Übersetzungsverhältnis und einem zweiten Übersetzungsverhältnis umschaltbar ist, welches gegensinnig zu dem ersten Übersetzungsverhältnis ist.

Mit anderen Worten wird bei dem ersten Übersetzungsverhältnis eine erste Eingangsdrehrichtung des Getriebes bzw. der Ausgangswelle des elektrischen Antriebs in eine (Ausgangs)Drehrichtung des Getriebes bzw. eines (ersten) Pumpenglieds übertragen, und bei dem zweiten Übersetzungsverhältnis eine zur ersten Eingangsdrehrichtung gegensinnige zweite Eingangsdrehrichtung des Getriebes bzw. der Ausgangswelle des elektrischen Antriebs in dieselbe (einheitliche) (Ausgangs)Drehrichtung des Getriebes bzw. eines (ersten) Pumpenglieds übertragen. Hierdurch kann das Getriebe in einer Ausführung vorteilhaft, vorzugsweise ohne eigenen Aktuator, umgeschaltet werden.

In einer Ausführung weist das erste Übersetzungsverhältnis einen anderen Betrag auf als das zweite Übersetzungsverhältnis. Hierdurch kann in einer Ausführung die( betragsmäßig )selbe Drehzahl des elektrischen Antriebs bzw. seiner Ausgangswelle die Pumpe unterschiedlich schnell antreiben. Dadurch können in einer Ausführung vorteilhaft unterschiedliche Pumpenbetriebspunkte, insbesondere ein erster Betriebspunkt mit niedrige(re)m Förderdruck und großen/größerem Fördervolumen und ein zweiter Betriebspunkt mit großen/größerem Förderdruck und niedrige(re)m Fördervolumen, durch die( betragsmäßig )selbe Drehzahl des elektrischen Antriebs realisiert und so der Antrieb in einer Ausführung in einem vorteilhafte (re)n Betriebsbereich betrieben und/oder kompakt (er) ausgebildet werden. In einer Ausführung ist eines der beiden Übersetzungsverhältnisse gleich 1. Hierdurch kann in einer Ausführung ein besonders vorteilhafter Betriebspunkt realisiert werden.

Nach einer Ausführung der vorliegenden Erfindung weist das Getriebe, in einer Ausführung nur, eine Planetenstufe mit einem relativ zum Antriebsgehäuse drehfesten, insbesondere an einem Gehäuse der Pumpenvorrichtung drehfest angeordneten, Planetenträger auf.

Hierdurch können in einer Ausführung gegenüber dem rotierenden Planetenträger der DE 10 2017 117 600 A1 dynamische Belastungen, insbesondere Unwuchten, reduziert und/oder das Getriebe kompakt(er) ausgebildet werden.
Zusätzlich oder alternativ zu dem antriebsgehäusedrehfesten Planetenträger weist das Getriebe nach einer Ausführung der vorliegenden Erfindung wenigstens zwei axial hintereinander angeordnete bzw. aufeinanderfolgend (angeordnet)e, insbesondere gegensinnig( wirkend)e Freiläufe auf, durch die in einer Ausführung je nach Drehrichtung der Ausgangswelle des elektrischen Antriebs unterschiedliche Getriebeglieder des Getriebes, in einer Ausführung der vorstehend genannten Planetenstufe, das eine (erste) Pumpenglied angetrieben wird.

Hierdurch können in einer Ausführung gegenüber der DE 10 2017 117 600 A1 dynamische Belastungen, insbesondere Unwuchten, (weiter) reduziert und/oder das Getriebe (noch) kompakt(er) ausgebildet werden.

Zusätzlich oder alternativ zu dem antriebsgehäusedrehfesten Planetenträger und zusätzlich oder alternativ zu den axial hintereinander angeordneten Freiläufen weist nach einer Ausführung der vorliegenden Erfindung das andere (zweite) Pumpenglied, insbesondere also der Rotor oder das Pumpengehäuse, eine relativ zur Ausgangswelle, insbesondere aktiv bzw. aktuiert, verdrehbare Antriebswelle auf.

Hierdurch kann eine vorstehend erläuterte Differentialpumpe besonders vorteilhaft, insbesondere kompakt(er) aktuiert werden. Insbesondere in diesem Fall kann der elektrische Antrieb in einer Ausführung in bestimmten Betriebszuständen bzw. -bereichen generatorisch wirken und so Pumpengehäuse bzw. Rotor abstützen bzw. (ab)bremsen.

In einer Ausführung ist das eine (erste) Pumpenglied in einem bzw. dem (ersten) Freilauf mit einem Sonnenrad, insbesondere direkt, verbunden. Zusätzlich oder alternativ ist in einer Ausführung das eine (erste) Pumpenglied in einem bzw. dem, insbesondere zu dem einen (ersten) Freilauf gegensinnigen weiteren Freilauf, mit einem Hohlrad einer, insbesondere der, Planetenstufe des Getriebes verbunden.
Hierdurch können in einer Ausführung jeweils, insbesondere in Kombination miteinander, vorteilhafte Übersetzungen realisiert und/oder das Getriebe kompakt(er) ausgebildet werden.

In einer Ausführung ist die Ausgangswelle des elektrischen Antriebs mit einem Sonnenrad einer, insbesondere der (vorstehend genannten), Planetenstufe des Getriebes drehfest verbunden. Zusätzlich oder alternativ ist in einer Ausführung die Ausgangswelle des elektrischen Antriebs in einem, insbesondere dem einen (ersten), Freilauf mit dem einen Pumpenglied verbunden.

Hierdurch können in einer Ausführung jeweils, insbesondere in Kombination miteinander, vorteilhafte Übersetzungen realisiert und/oder das Getriebe kompakt(er) ausgebildet werden.
Eine Pumpenvorrichtung nach der vorliegenden Erfindung kann mit besonderem Vorteil in Kraftfahrzeugen, insbesondere zur Hydraulik-, insbesondere Ölversorgung eines (Kraft)Fahrzeuggetriebes, verwendet werden.

Entsprechend weist nach einer Ausführung der vorliegenden Erfindung ein Kraftfahrzeug eine hier beschriebene Pumpenvorrichtung auf, die in einer Weiterbildung zur Hydraulik-, insbesondere Ölversorgung eines (Kraft)Fahrzeuggetriebes vorgesehen, insbesondere eingerichtet, ist bzw. verwendet wird.

In einer Ausführung wird bzw. ist ein zweiter Antrieb, in einer Ausführung eine Brennkraftmaschine, insbesondere zum Antreiben des Kraftfahrzeugs, mit der Antriebswelle des anderen (zweiten) Pumpengliedes gekoppelt bzw. diese hierzu vorgesehen, insbesondere eingerichtet, bzw. wird hierzu verwendet.

Hierdurch kann die Pumpe in einer Ausführung besonders vorteilhaft, insbesondere energiesparend(er), kompakt(er) und/oder variabel/variabler betrieben werden.

Ausgangs- und Antriebswelle sind in einer Ausführung parallel, in einer Weiterbildung konzentrisch.

Hierdurch kann die Pumpenvorrichtung in einer Ausführung kompakt(er) ausgebildet werden.

Zum Betreiben einer hier beschriebenen Pumpenvorrichtung wird nach einer Ausführung der vorliegenden Erfindung der elektrische Antrieb in einem ersten Betriebsmodus mit einer ersten Drehrichtung, in einer Ausführung mit einer Drehzahl, betrieben, insbesondere um die Pumpe in einem ersten Betriebspunkt mit niedrige(re)m Förderdruck und großen/größerem Fördervolumen zu betreiben, und in einem zweiten Betriebsmodus mit einer zu der ersten Drehrichtung gegensinnigen zweiten Drehrichtung, in einer Ausführung mit der( betragsmäßig )selben Drehzahl, betrieben, insbesondere um die Pumpe in einem zweiten Betriebspunkt mit großen/größerem Förderdruck und niedrige(re)m Fördervolumen zu betreiben.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Pumpenvorrichtung nach einer Ausführung der vorliegenden Erfindung;
- Fig. 2: eine Pumpenvorrichtung nach einer weiteren Ausführung der vorliegenden Erfindung;
- Fig. 3: eine Pumpenvorrichtung nach einer nicht beanspruchten Ausführung;
- Fig. 4: eine Pumpenvorrichtung nach einer weiteren nicht beanspruchten Ausführung der; und
- Fig. 5: ein Verfahren zum Betreiben einer der Pumpenvorrichtungen nach einer Ausführung der vorliegenden Erfindung.

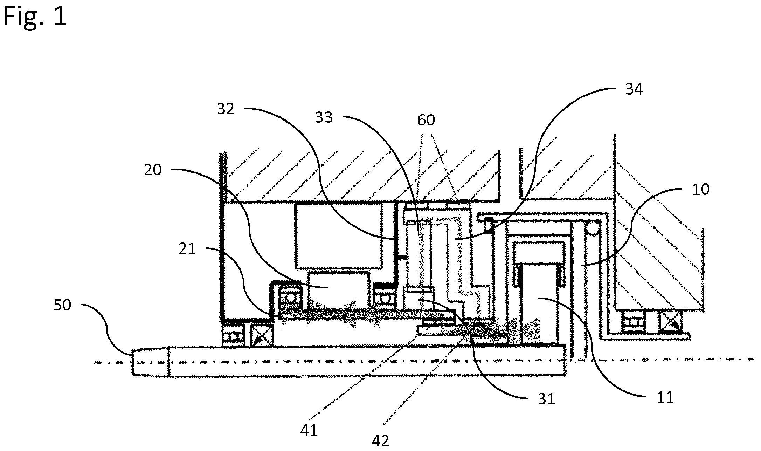

Fig. 1 zeigt eine Pumpenvorrichtung nach einer Ausführung der vorliegenden Erfindung in einem Axial- bzw. Meridianschnitt.

Die Pumpenvorrichtung weist eine Pumpe mit einem (ersten) Pumpenglied in Form eines drehbar gelagerten Pumpengehäuses 10 und einem anderen (zweiten) Pumpenglied in Form eines Rotors 11 auf, der seinerseits in dem Pumpengehäuse 10 drehbar angeordnet ist.

Die Pumpenvorrichtung weist einen elektrischen Antrieb mit einem Antriebsgehäuse 20 und einer hiergegen verdrehbaren Ausgangswelle 21 und ein Getriebe mit einer Planetenstufe auf, das die Ausgangswelle 21 mit dem einen (ersten) Pumpenglied bzw. Pumpengehäuse 10 koppelt.

Das andere (zweite) Pumpenglied bzw. der Rotor 11 weist eine relativ zur Ausgangswelle 21 verdrehbare Antriebswelle 50 auf, die konzentrisch in der Ausgangshohlwelle 21 angeordnet und mit einem zweiten Antrieb, in einer Ausführung einer Brennkraftmaschine, gekoppelt ist (nicht dargestellt).

Die Planetenstufe weist ein Sonnenrad 31, mit dem die Ausgangswelle 21 drehfest verbunden ist, ein Hohlrad 34, welches relativ zum Antriebsgehäuse 20 durch Lager 60 drehbar gelagert ist, und Planeten 33 auf, deren Außenverzahnung in Eingriff mit einer Außenverzahnung des Sonnenrades 31 und einer Innenverzahnung des Hohlrades 34 stehen und die drehbar auf einem Planetenträger 32 der Planetenstufe gelagert sind, welcher relativ zum Antriebsgehäuse 20 drehfest angeordnet ist.

Das eine (erste) Pumpenglied bzw. Pumpengehäuses 10 ist in einem Freilauf 41 mit dem Sonnenrad 31 bzw. der Ausgangswelle 21 und in einem gegensinnigen weiteren Freilauf 42 mit dem Hohlrad 34 verbunden.

Die beiden Freiläufe 41, 42 sind axial hintereinander angeordnet.

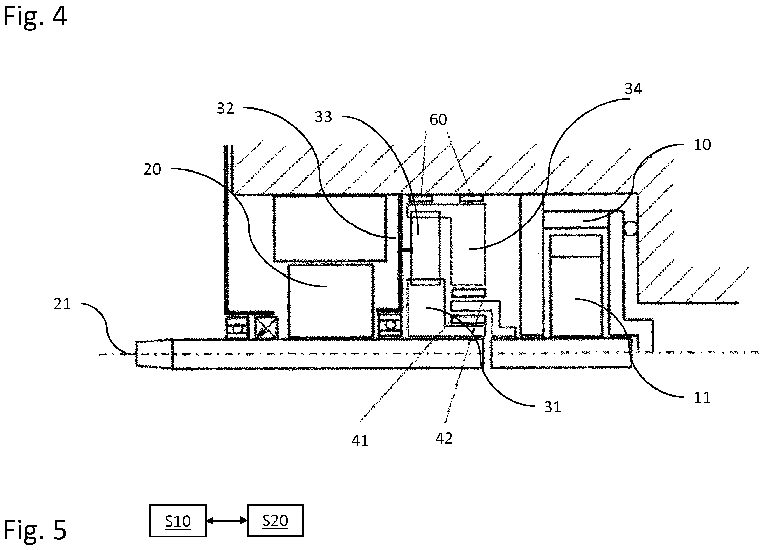

In einem ersten Betriebsmodus (Fig. 5: S10) wird der elektrische Antrieb mit einer ersten Drehrichtung betrieben bzw. dreht seine Ausgangswelle 21 relativ zu seinem Antriebsgehäuse 20 in einer ersten Drehrichtung.

Dabei sperrt Freilauf 41, so dass die Ausgangswelle 21 und das eine (erste) Pumpenglied bzw. Pumpengehäuses 10 gemeinsam mit derselben Drehzahl drehen.

Aufgrund des feststehenden Planetenträgers 32 drehen die Planeten 33 das Hohlrad 34 in einer zur ersten Drehrichtung von Ausgangswelle 21 bzw. Pumpengehäuse 10 gegensinnigen Drehrichtung. Dabei öffnet der zum Freilauf 41 gegensinnige Freilauf 42.

In einem zweiten Betriebsmodus (Fig. 5: S20) wird der elektrische Antrieb mit einer zu dieser ersten Drehrichtung gegensinnigen zweiten Drehrichtung betrieben bzw. dreht seine Ausgangswelle 21 relativ zu seinem Antriebsgehäuse 20 in einer gegensinnigen zweiten Drehrichtung.

Aufgrund des feststehenden Planetenträgers 32 drehen die Planeten 33 das Hohlrad 34 in einer zu dieser zweiten Drehrichtung der Ausgangswelle 21 gegensinnigen Drehrichtung. Dabei sperrt nun der zum Freilauf 41 gegensinnige Freilauf 42 und das Hohlrad 34 dreht das eine (erste) Pumpenglied bzw. Pumpengehäuse 10 gegensinnig zur zweiten Drehrichtung der Ausgangswelle 21, wobei Freilauf 41 öffnet.

Somit wird das Getriebe alleine durch Drehrichtungsumkehr des elektrischen Antriebs zwischen einem ersten und gegensinnigen zweiten Übersetzungsverhältnis umgeschaltet.

Durch Variieren der Differenz zwischen der Drehzahl von Rotor 11 (durch Antriebswelle 50) und Pumpengehäuse 10 (durch elektrischen Antrieb 20, 21) kann der Betriebspunkt der Pumpe vorteilhaft variiert und zudem Antriebsenergie von der Brennkraftmaschine genutzt werden.

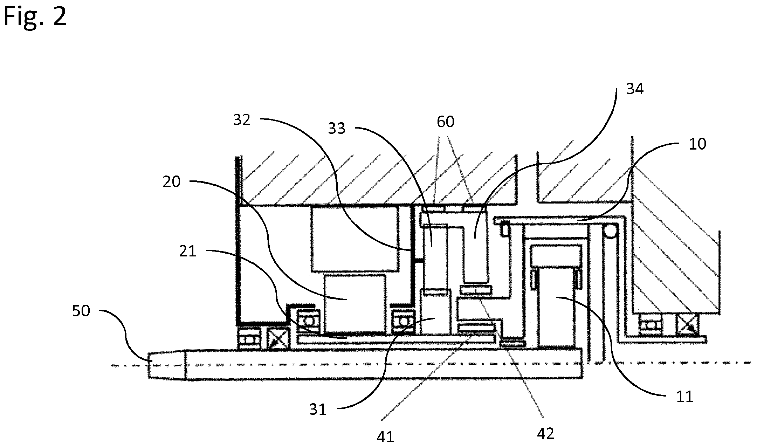

Fig. 2 zeigt eine Pumpenvorrichtung nach einer weiteren Ausführung der vorliegenden Erfindung in Fig. 1 entsprechender Darstellung. Übereinstimmende Merkmale sind durch identische Bezugszeichen identifiziert, so dass auf die vorstehende Beschreibung Bezug genommen und nachfolgend auf Unterschiede eingegangen wird.

In der Ausführung der Fig. 2 sind die Freiläufe 41, 42 radial übereinander angeordnet.

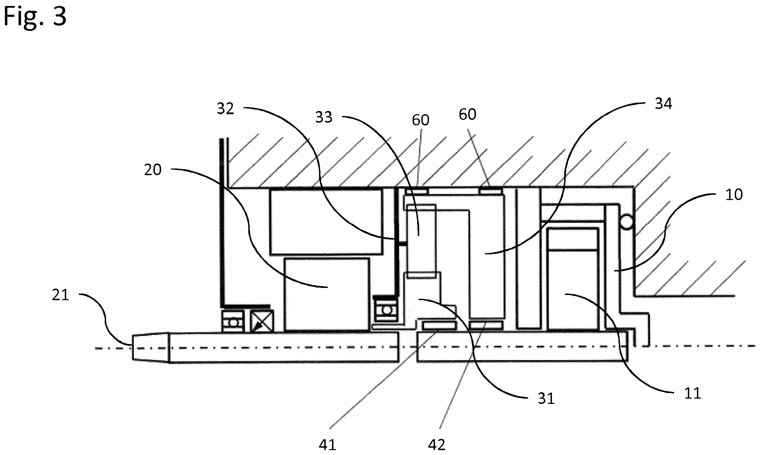

Fig. 3 zeigt eine Pumpenvorrichtung nach einer nicht beanspruchten Ausführung in Fig. 1 entsprechender Darstellung. Übereinstimmende Merkmale sind durch identische Bezugszeichen identifiziert, so dass auf die vorstehende Beschreibung zu Fig. 1 Bezug genommen und nachfolgend auf Unterschiede eingegangen wird.

In der Ausführung der Fig. 3 ist das Pumpengehäuse 10 relativ zum Antriebsgehäuse 20 drehfest, die Antriebswelle 50 zum Antreiben des Pumpengehäuses 10 entfällt.

Das eine (erste) Pumpenglied ist in diesem Fall der Rotor 11, das andere (zweite) Pumpenglied das Pumpengehäuse 10, in dem der Rotor 11 angeordnet ist.

Das Getriebe bzw. die Planetenstufe koppelt die Ausgangswelle 21 des elektrischen Antriebs mit dem einen (ersten) Pumpenglied bzw. Rotor 11.

Das eine (erste) Pumpenglied bzw. der Rotor 11 ist im Freilauf 41 mit dem Sonnenrad 31 bzw. der Ausgangswelle 21 und im gegensinnigen weiteren Freilauf 42 mit dem Hohlrad 34 verbunden.

Im ersten Betriebsmodus sperrt Freilauf 41, so dass die Ausgangswelle 21 und das eine (erste) Pumpenglied bzw. der Rotor 11 gemeinsam mit derselben Drehzahl drehen (Übersetzungsverhältnis = 1) .

Aufgrund des feststehenden Planetenträgers 32 drehen die Planeten 33 das Hohlrad 34 in einer zur ersten Drehrichtung von Ausgangswelle 21 bzw. Rotor 11 gegensinnigen Drehrichtung. Dabei öffnet der zum Freilauf 41 gegensinnige Freilauf 42.

Im zweiten Betriebsmodus wird der elektrische Antrieb mit einer gegensinnigen Drehrichtung betrieben bzw. dreht seine Ausgangswelle 21 relativ zu seinem Antriebsgehäuse 20 in einer gegensinnigen Drehrichtung.

Aufgrund des feststehenden Planetenträgers 32 drehen die Planeten 33 das Hohlrad 34 in einer zu dieser Drehrichtung der

Ausgangswelle 21 gegensinnigen Drehrichtung. Dabei sperrt nun der zum Freilauf 41 gegensinnige Freilauf 42 und das Hohlrad 34 dreht das eine (erste) Pumpenglied bzw. den Rotor 11 gegensinnig zur Drehrichtung der Ausgangswelle 21, wobei Freilauf 41 öffnet. Das Übersetzungsverhältnis ist (betragsmäßig) ungleich 1.

Fig. 4 zeigt eine Pumpenvorrichtung nach einer weiteren nicht beanspruchten Ausführung in Fig. 3 entsprechender Darstellung. Übereinstimmende Merkmale sind durch identische Bezugszeichen identifiziert, so dass auf die vorstehende Beschreibung zu Fig. 3 Bezug genommen und nachfolgend auf Unterschiede eingegangen wird.

In der Ausführung der Fig. 4 sind die Freiläufe 41, 42 radial übereinander angeordnet.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

**Bezugszeichenliste**

| | |
|---|---|
| 10 | Pumpengehäuse |
| 11 | Rotor |
| 20 | Antriebsgehäuse |
| 21 | Ausgangswelle |
| 31 | Sonnenrad |
| 32 | Planetenträger |
| 33 | Planet |
| 34 | Hohlrad |
| 41, 42 | Freilauf |
| 50 | Antriebswelle |
| 60 | Lager |

## Patentansprüche

1. Pumpenvorrichtung, insbesondere für ein Kraftfahrzeug, die
eine Pumpe mit zwei relativ zueinander beweglichen Pumpengliedern (10, 11);
einen elektrischen Antrieb mit einem Antriebsgehäuse (20) und einer hiergegen verdrehbaren Ausgangswelle (21); und
ein Getriebe (31-34) aufweist, das
die Ausgangswelle mit dem einen Pumpenglied koppelt und durch Drehrichtungsumkehr des elektrischen Antriebs zwischen einem ersten und gegensinnigen zweiten Übersetzungsverhältnis umschaltbar ist,
**dadurch gekennzeichnet daß**
das andere Pumpenglied eine relativ zur Ausgangswelle verdrehbare Antriebswelle (50) aufweist.

2. Pumpenvorrichtung nach Anspruch 1, wobei das eine Pumpenglied in einem Freilauf (41) mit einem Sonnenrad (31) und/oder in einem, insbesondere gegensinnigen weiteren, Freilauf (42) mit einem Hohlrad (34) einer Planetenstufe des Getriebes verbunden ist.

3. Pumpenvorrichtung nach einem der vorhergehenden Ansprüche, wobei die Ausgangswelle in einem Freilauf (41) mit dem einen Pumpenglied und/oder drehfest mit einem Sonnenrad (31) einer Planetenstufe des Getriebes verbunden ist.

4. Pumpenvorrichtung nach einem der vorhergehenden Ansprüche, wobei das eine Pumpenglied einen Rotor (11) und das andere Pumpenglied ein Pumpengehäuse (10) aufweist, in dem der Rotor angeordnet ist.

5. Pumpenvorrichtung nach einem der vorhergehenden Ansprüche, wobei das eine Pumpenglied ein Pumpengehäuse (10) und das andere Pumpenglied einen Rotor (11) aufweist, der in dem Pumpengehäuse angeordnet ist.

6. Pumpenvorrichtung nach einem der vorhergehenden Ansprüche, wobei ein zweiter Antrieb, insbesondere eine Brennkraftmaschine, mit der Antriebswelle gekoppelt ist.

7. Pumpenvorrichtung nach einem der vorhergehenden Ansprüche, wobei das Getriebe eine Planetenstufe mit einem relativ zum Antriebsgehäuse drehfesten Planetenträger (32) und/oder zwei axial hintereinander angeordnete Freiläufe (41, 42) aufweist

8. Kraftfahrzeug mit einer Pumpenvorrichtung nach einem der vorhergehenden Ansprüche, insbesondere zur Hydraulikversorgung eines Fahrzeuggetriebes.

9. Verfahren zum Betreiben einer Pumpenvorrichtung nach einem der vorhergehenden Ansprüche, wobei der elektrische Antrieb in einem ersten Betriebsmodus (S10) mit einer ersten Drehrichtung und in einem zweiten Betriebsmodus (S20) mit einer gegensinnigen zweiten Drehrichtung betrieben wird.

## Claims

1. Pump apparatus, in particular for a motor vehicle, having
a pump with two pump members (10, 11) which are movable relative to one another;
an electric drive with a drive housing (20) and with an output shaft (21) which is rotatable with respect thereto; and
a gear mechanism (31-34) which couples the output shaft to the one pump member and, by reversal of the direction of rotation of the electric drive, is switchable between a first and opposite second transmission ratio,
**characterized in that**
the other pump member has a drive shaft (50) which is rotatable relative to the output shaft.

2. Pump apparatus according to Claim 1, wherein the one pump member is connected in a freewheel (41) to a sun gear (31) and/or in an, in particular oppositely directed, further freewheel (42) to an internal gear (34) of a planetary stage of the gear mechanism.

3. Pump apparatus according to either of the preceding claims, wherein the output shaft is connected in a freewheel (41) to the one pump member and/or rotationally fixedly to a sun gear (31) of a planetary stage of the gear mechanism.

4. Pump apparatus according to one of the preceding claims, wherein the one pump member has a rotor (11) and the other pump member has a pump housing (10) in which the rotor is arranged.

5. Pump apparatus according to one of the preceding claims, wherein the one pump member has a pump housing (10) and the other pump member has a rotor (11) which is arranged in the pump housing.

6. Pump apparatus according to one of the preceding claims, wherein a second drive, in particular an internal combustion engine, is coupled to the drive shaft.

7. Pump apparatus according to one of the preceding claims, wherein the gear mechanism has a planetary stage with a planet carrier (32) which is rotationally fixed relative to the drive housing, and/or has two freewheels (41, 42) which are arranged axially one behind the other.

8. Motor vehicle having a pump apparatus according to one of the preceding claims, in particular for the hydraulic supply of a vehicle transmission.

9. Method for operating a pump apparatus according to one of the preceding claims, wherein the electric drive is operated in a first operating mode (S10) with a first direction of rotation and in a second operating mode (S20) with an opposite second direction of rotation.

## Revendications

1. Dispositif de pompage, en particulier pour un véhicule automobile, qui présente
une pompe dotée de deux organes de pompe (10, 11) mobiles l'un par rapport à l'autre ;
un entraînement électrique doté d'un carter d'entraînement (20) et d'un arbre de sortie (21) pouvant tourner par rapport à celui-ci ; et
une transmission (31-34) qui
accouple l'arbre de sortie à l'un des organes de pompe et, par inversion du sens de rotation de l'entraînement électrique, peut être commutée entre un premier rapport de transmission et un deuxième rapport de transmission opposé,
**caractérisé en ce que**
l'autre organe de pompe présente un arbre d'entraînement (50) pouvant tourner par rapport à l'arbre de sortie.

2. Dispositif de pompage selon la revendication 1, dans lequel l'un des organes de pompe et relié, dans une roue libre (41), à une roue planétaire (31) et/ou, dans une autre roue libre (42) en particulier opposée, à une couronne (34) d'un étage planétaire de la transmission.

3. Dispositif de pompage selon l'une des revendications précédentes, dans lequel l'arbre de sortie est relié, dans une roue libre (41), à l'un des organes de pompe et/ou de manière solidaire en rotation à une roue planétaire (31) d'un étage planétaire de la transmission.

4. Dispositif de pompage selon l'une des revendications précédentes, dans lequel l'un des organes de pompe présente un rotor (11) et l'autre organe de pompe présente un carter de pompe (10) dans lequel le rotor est disposé.

5. Dispositif de pompage selon l'une des revendications précédentes, dans lequel l'un des organes de pompe présente un carter de pompe (10) et l'autre organe de pompe présente un rotor (11) qui est disposé dans le carter de pompe.

6. Dispositif de pompage selon l'une des revendications précédentes, dans lequel un deuxième entraînement, en particulier un moteur à combustion interne, est accouplé à l'arbre d'entraînement.

7. Dispositif de pompage selon l'une des revendications précédentes, dans lequel la transmission présente un étage planétaire comportant un porte-satellites (32) solidaire en rotation par rapport au carter d'entraînement et/ou deux roues libres (41, 42) disposées axialement l'une derrière l'autre

8. Véhicule automobile comportant un dispositif de pompage selon l'une des revendications précédentes, en particulier pour l'alimentation hydraulique d'une transmission de véhicule.

9. Procédé de fonctionnement d'un dispositif de pompage selon l'une des revendications précédentes, dans lequel l'entraînement électrique fonctionne avec un premier sens de rotation dans un premier mode de fonctionnement (S10) et avec un deuxième sens de rotation opposé dans un deuxième mode de fonctionnement (S20).
